(19) Europäisches Patentamt
European Patent Office
Office européen des brevets

(11) EP 2 172 701 A2

(12) **EUROPEAN PATENT APPLICATION**

(43) Date of publication:
07.04.2010 Bulletin 2010/14

(51) Int Cl.:
*F21V 9/14* (2006.01)          *G02B 5/30* (2006.01)

(21) Application number: 09170550.9

(22) Date of filing: 17.09.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 18.09.2008 JP 2008239908

(71) Applicant: Fujifilm Corporation
Minato-ku
Tokyo 106-8620 (JP)

(72) Inventor: Kamada, Koh
Kanagawa (JP)

(74) Representative: Grünecker, Kinkeldey,
Stockmair & Schwanhäusser
Anwaltssozietät
Leopoldstrasse 4
80802 München (DE)

(54) **Lighting tool and outdoor display device**

(57) A lighting tool including a circularly polarizing plate disposed over a light-emitted surface, a lamp main body and a light source disposed in the lamp main body, wherein the circularly polarizing plate is disposed over the light-emitted surface so that light emitted from the light source passes therethrough.

FIG. 1

EP 2 172 701 A2

**Description**

BACKGROUND OF THE INVENTION

Field of the Invention

The present invention relates to an outdoor display device and a lighting tool (e.g., a vehicular taillight) which can prevent lighting-related false recognition when being irradiated with a high-intensity external light,

Description of the Related Art

Vehicular taillights for automobiles, etc. are generally called a tail lamp. The tail lamp is a warning light tool which is provided in order that a preceding automobile can be recognized by a subsequent automobile(s). The lighting of the tail lamp is required to operate simultaneously with that of a head lamp. In general, the tail lamp serves also as a brake lamp (stop lamp), and brightly lights particularly on braking (at an intensity about 5 times) to invite someone's attention.

Meanwhile, when an automobile runs with the sun setting at the back or intensely lights the preceding automobile's tail lamp by its headlight, the tail lamp reflects a high-intensity external light after receiving it. In this case, the subsequent automobile's driver falsely recognizes that the tail lamp lights (the preceding automobile's driver brakes). This often causes rear-end collision and is a serious problem on safety driving,

In order to solve the above problem, for example, Japanese Patent Application Laid-Open (JP-A) No. 2003-141907 proposes a vehicular lighting tool including a lamp cover and a polarizing film whose surface has fine convex and concave portions, the polarizing film being attached to the lamp cover. But, this vehicular lighting tool is used for improving designability by changing its appearance on or off of lighting. Thus, this does not relate to characteristic features of the present invention; i.e., prevention of lighting-related false recognition caused by irradiation of a high-intensity external light.

At the present stage, therefore, no suggestions have been presented on improvement in visibility of a lighting tool (e.g., a tail lamp) which is excellent in durability and exhibits suppressed reflection with respect to an external light.

Also, in the field of outdoor advertisement, so-called digital signage is being established as described in, for example, NIKKEI MICRODEVICES, August 2008, pp. 53 to 61. At present, LED displays are predominant in digital signage. But, other various techniques are attempted to be practically employed in this field; e.g., liquid crystal displays and self-emitting devices such as organic EL displays and plasma displays.

Advertizing displays are not seen to be degraded in image quality from early-evening to night "complete outdoor," but are difficult to see in the daytime. The reason for this is that the displaying light is smaller in intensity than the surface-reflected light and that "black" spots are turned into whitish due to an external light. In this case, the external light is sunlight, and if the displaying light intensity is set so as to be greater than the surface-reflected light intensity of sunlight, it leads to energy waste.

Also "sub-outdoor," for example, in large stores, railroad stations and airports, (advertizing) displays and flight boards may be difficult to see depending on the surrounding conditions, In this case, the external light is that emitted from a high-intensity light.

If degradation of image contrast due to exposure to an external light is improved, either technique may be satisfactorily employed. However, no reports have been presented on techniques to meet the requirements so far.

BRIEF SUMMARY OF THE INVENTION

An object of the present invention is to provide a lighting tool which is excellent in durability and can prevent lighting-related false recognition when being irradiated with a high-intensity external light.

Notably, the mechanism in which the lighting tool of the present invention prevents lighting-related false recognition when being irradiated with a high-intensity external light can be applied to outdoor display devices (e.g., LED displays) which capable of exhibiting remarkably enhanced contrast even when being irradiated with a high-intensity external light.

The present inventor conducted extensive studies in order to solve the above-described problems, and has obtained the following findings. Specifically, when a circularly polarizing plate is disposed over a light-emitted surface, an external light which has entered the lamp main body of a lighting tool is mostly prevented by the circularly polarizing plate from being emitted again as a reflected light. Meanwhile, since light which has been emitted from a light source passes through the circularly polarizing plate at only one time, the light can be clearly recognized although it is reduced in intensity in some degree by the circularly polarizing plate. As a result, the external light is prevented from being reflected, and even when an automobile runs with the sun setting at the back or intensely lights the preceding automobile's tail lamp by its headlight, whether or not the preceding automobile's tail lamp is turned on can be visually recognized, which can promote safety driving.

Also in outdoor display devices, by disposing on their outermost surface a circularly polarizing plate whose surface is subjected to an antireflection treatment, a surface-reflected light is prevented from being emitted upon irradiation of an intense external light. In addition, the external light which has entered the devices is mostly prevented from being emitted again as a reflected light, on the basis of the mechanism described above in relation to the lighting tool. As a result, image display with high contrast can be achieved even in daylight

The present invention has been accomplished on the basis of the above findings obtained by the present inventor- Means for solving the above-described problems are as follows.

< 1 > A lighting tool, including:

a circularly polarizing plate disposed over a light-emitted surface of the lighting tool.

< 2 > The lighting tool according to < 1 > above, further including a lamp main body and a light source disposed in the lamp main body, wherein the circularly polarizing plate is disposed over the light-emitted surface so that light emitted from the light source passes therethrough.
< 3 > The lighting tool according to any one of < 1 > and < 2 > above,
wherein the circularly polarizing plate includes a linearly polarizing plate and a quarter-wave plate, and wherein the linearly polarizing plate and the quarter-wave plate are attached to each other so that an angle formed between a polarized light absorption axis of the linearly polarizing plate and an optic axis of the quarter-wave plate is 45°.
< 4 > The lighting tool according to < 3 > above, wherein the circularly polarizing plate is disposed over the light-emitted surface so that the quarter-wave plate faces the light source.
< 5 > The lighting tool according to any one of < 3 > and < 4 > above,
wherein the linearly polarizing plate includes a rod-like metal microparticle as a polarizer.
< 6 > The lighting tool according to < 5 > above, wherein the rod-like metal microparticle has a core-shell structure in which a core nanorod is covered with a shell.
< 7 > The lighting tool according to any one of < 5 > and < 6 > above,
wherein the rod-like metal microparticle is at least one selected from gold, silver, copper and aluminum.
< 8 > The lighting tool according to any one of < 1 > to < 7 > above, wherein the lighting tool serves as a vehicular taillight.
< 9 > An outdoor display device including:

a circularly polarizing plate disposed over an image-displaying surface of the outdoor display device,

wherein the circularly polarizing plate includes a quarter-wave plate and a linearly polarizing plate containing a polarizer, and
wherein the polarizer is a rod-like metal microparticle.
< 10 > The outdoor display device according to < 9 > above, further including an antireflection film over the linearly polarizing plate of the circularly polarizing plate.

The present invention can provide a lighting tool which is excellent in durability and can prevent lighting-related false recognition when being irradiated with a high-intensity external light.

Notably, the mechanism in which the lighting tool of the present invention prevents lighting-related false recognition when being irradiated with a high-intensity external light can be applied to outdoor display devices (e.g., LED displays) which capable of exhibiting remarkably enhanced contrast even when being irradiated with a high-intensity external light.

BRIEF DESCRIPTION OF THE DRAWINGS

FIG. 1 is a schematic view of an exemplary lighting tool of the present invention.
FIG. 2 is a schematic view of another exemplary lighting tool of the present invention.
FIG. 3 is an explanatory view for describing the mechanism in which lighting-related false recognition is prevented upon irradiation of an external light.
FIG. 4 is an explanatory view for describing a method for attaching a linearly polarizing plate to a quarter-wave plate to form a circularly polarizing plate.

FIG. 5 illustrates an optical model used for evaluating lighting-related visibility in Examples.

FIG. 6 is a photograph of Comparative Example 1 which is taken when a penlight is turned on in a state where no circularly polarizing plate is provided.

FIG. 7 is a photograph of Comparative Example 1 which is taken when a penlight is turned off in a state where no circularly polarizing plate is provided.

FIG. 8 is a photograph of each of Examples 1 and 2 which is taken when a penlight is turned on in a state where each of the circularly polarizing plates of Production Examples 2 and 3 is provided.

FIG. 9 is a photograph of each of Examples 1 and 2 which is taken when a penlight is turned off in a state where each of the circularly polarizing plates of Production Examples 2 and 3 is provided.

DETAILED DESCRIPTION OF THE INVENTION

Alighting tool of the present invention includes a circularly polarizing plate at a surface from which light is emitted, Specifically, the lighting tool includes a lamp main body, a light source and a circularly polarizing plate; and, if necessary, further includes other members.

< Circularly polarizing plate >

The circularly polarizing plate includes a linearly polarizing plate and a quarter-wave plate. Preferably, the linearly polarizing plate and the quarter-wave plate are attached to each other so that an angle formed between a polarized light absorption axis of the linearly polarizing plate and an optic axis of the quarter-wave plate is 45°.

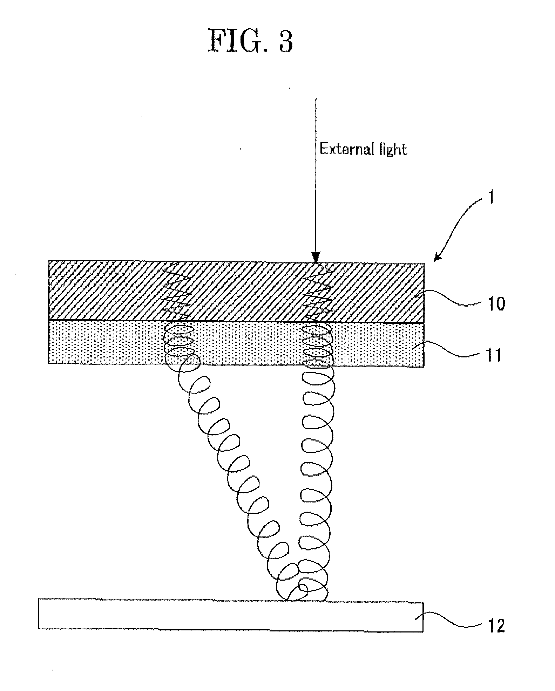

Next will be described the mechanism in which the lighting tool (e.g., tail lamp) of the present invention prevents lighting-related false recognition when being irradiated with a high-intensity external light. As shown in FIG. 3, after passing through a linearly polarizing plate 10 of a circularly polarizing plate 1, an external light becomes a linearly polarized light, which then passes through a quarter-wave plate 11 to become a circularly polarized light. The circularly polarized light is reflected on a reflection plate 12 contained in a lamp main body to become a circularly polarized light whose rotation direction is reversed, which passes again through the quarter-wave plate 11 to become a linearly polarized light. Here, this linearly polarized light is perpendicular to the axis of a linear polarizer of the linearly polarizing plate 10 and thus, cannot pass through the linearly polarizing plate; i.e., is prevented by the circularly polarizing plate from being emitted again as a reflected light.

Meanwhile, although light emitted from a light source is reduced in brightness by about 50% due to the circularly polarizing plate 1, it can be emitted outside. Thus, lightning of a lamp can be visually recognized,

On the basis of the above-described mechanism, lighting-related false recognition can be prevented, since lighting of a warning light can be visually recognized without adverse effects by an external light.

- Linearly polarizing plate -

The linearly polarizing plate includes at least a polarizing layer and a base; and, if necessary, further includes other layers.

-- Polarizing layer

The polarizing layer contains at least a polarizer and a binder resin; and, if necessary, further contains other components.

The polarizer is preferably a dichroic material. The dichroic material is not particularly limited and may be appropriately selected depending on the purpose. Examples thereof include rod-like metal microparticles, carbon nanotubes and metal complexes. Of these, rod-like metal microparticles are particularly preferred from the viewpoint of durability.

The rod-like metal microparticles are those each having a size of a nanometer order; i.e., several nanometers to 100 nm. Here, the rod-like metal microparticles refer to particles having an aspect ratio (major axis length/minor axis length) of 1.1 or greater.

Such rod-like metal microparticles exhibit surface plasmon resonance and absorbs light of the ultraviolet to infrared region. Also, rod-like metal microparticles whose minor axis length is 1 nm to 50 nm, major axis length is 10 nm to 1,000 nm, and aspect ratio is 1.1 or more can absorb light of one wavelength in a minor axis direction and light of another wavelength in a major axis direction.

Examples of the metal of the rod-like metal microparticles include gold, silver, copper, platinum, palladium, rhodium, osmium, ruthenium, iridium, iron, tin, zinc, cobalt, nickel, chromium, titanium, tantalum, tungsten, indium, aluminum and alloys thereof, with gold, silver, copper and aluminum being preferred, with gold and silver being particularly preferred.

Preferably, the rod-like metal microparticles each contain at least two different metals and have a core-shell structure in which the core nanorod is covered with the shell.

- Binder resin -

The binder resin is not particularly limited and may be appropriately selected depending on the purpose. Examples thereof include polyvinyl alcohols, polymethacrylic acids, polyacrylic acids, polyethylene terephthalates, polyvinyl butyrals, polymethyl methacrylates, polyvinyl formals, polycarbonates, cellulose butylate, polystyrens, polyvinyl chlorides, polyvinylidene chlorides, polyethylene adipamides, polyvinyl acetates and copolymers thereof (e.g., vinyl chloride-vinyl acetate copolymers and styrene-methyl methacrylate copolymers). These may be used individually or in combination.

The thickness of the polarizing layer is not particularly limited and may be appropriately determined depending on the purpose. Preferably, it is 10 μm to 300 μm.

-- Base --

The shape, structure, size, etc. of the base are not particularly limited and may be appropriately determined depending on the purpose. The shape is, for example, a flat plate or a sheet. The structure may be appropriately selected from a single-layered structure and a laminated structure.

The material for the base is not particularly limited and is preferably inorganic or organic materials.

Examples of the inorganic materials include glass, quartz and silicon.

Examples of the organic materials include acetate resins (e.g., triacetyl cellulose (TAG)), polyester resins, polyether sulfone resins, polysulfone resins, polycarbonate resins, polyamide resins, polyimide-resins, polyolefin resins, acrylic resins, polynorbornene resins, cellulose resins, polyarylate resins, polystyrene resins, polyvinyl alcohol resins, polyvinyl chloride resins, polyvinylidene chloride resins and polyacrylic resins, These may be used individually or in combination.

The support may be an appropriately synthesized product or a commercially available product.

The thickness of the support is not particularly limited and may be appropriately determined depending on the purpose. It is preferably 10 μm to 2,000 μm, more preferably 50 μm to 500 μm.

The polarizing plate can be produced as follows. Specifically, a coating liquid containing the polarizer and the binder resin is applied on the base, followed by drying. And, the resultant coated film is stretched in a certain direction.

< Quarter-wave plate >

The quarter-wave plate is not particularly limited and may be appropriately selected depending on the intended purpose. Examples thereof include a stretched polycarbonate film, a stretched norbornen polymer film, a transparent film in which inorganic particles exhibiting birefringence (e.g., strontium carbonate) are oriented and a thin film in which an inorganic dielectric is obliquely deposited.

Examples of the quarter-wave plate include (1) a phase difference plate in which a birefringence film having a large retardation and a birefringence film having a small retardation are laminated so that optical axes thereof are perpendicularly crossed each other, as described in JP-ANos. 05-27118 and 05-27119; (2) a phase difference plate capable of attaining a quarter-wavelength phase shift in a wide region of wavelength, in which a polymer film attaining a quarter-wavelength phase shift at a certain wavelength and a polymer film formed of the same material to that of the other polymer film and attaining a half-wavelength phase shift at the same wavelength are laminated, as described in JP-A No. 10-68816; (2) a phase difference plate capable of attaining a quarter-wavelength phase shift in wider region of wavelength, in which two polymer films are laminated, as described in JP-A No. 10-90521; (3) a phase difference plate capable of attaining a quarter-wavelength phase shift in a wide region of wavelength and using a modified polycarbonate film described in International Publication No. WO 00/26705; and (4) a phase difference plate capable of attaining a quarter-wavelength phase shift in a wide region of wavelength and using a cellulose acetate film described in International Publication No. WO 00/65384.

Such a quarter-wave plate may be a commercially available product. Examples thereof include PURE ACE WR (trade name) (product of TEIJIN LIMITED.).

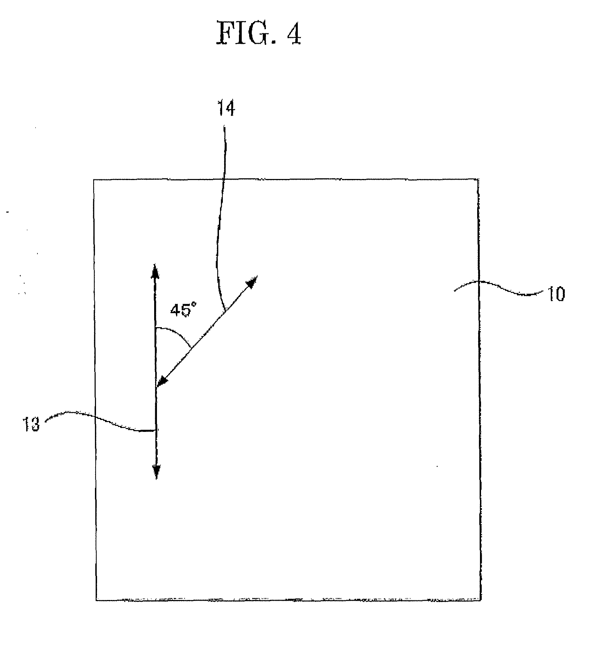

The circularly polarizing plate used in the present invention has the linearly polarizing plate and the quarter-wave plate. As shown in FIG. 4, the linearly polarizing plate and the quarter-wave plate attached to each other so that an angle formed between a polarized light absorption axis 13 of the linearly polarizing plate 10 and an optic axis 14 of the quarter-wave plate is 45°. Examples of the method for attaching them to each other include roll-to-roll lamination using an adhesive film.

The circularly polarizing plate is disposed over a light-emitted surface so that light emitted from a light source passes therethrough. In this case, the circularly polarizing plate is preferably disposed over a light-emitted surface so that the quarter-wave plate thereof faces a light source.

The method for attaching the circularly polarizing plate to a light-emitted surface is not particularly limited, so long as the quarter-wave plate thereof is made to face a light source, and may be appropriately selected depending on the purpose. Examples thereof include a method in which the circularly polarizing plate is made to adhere with an adhesive to a transparent substrate disposed on the light-emitted surface, and a method in which the circularly polarizing plate is attached via an attachment bracket to a peripheral portion where the attachment bracket does not prevent the lighting tool from being visually recognized.

< Lamp main body>

The shape, structure, size and material of the lamp main body are not particularly limited, so long as it can house a light source therein, and may be appropriately selected depending on the intended use, purpose, etc. As to the shape, for example, the lamp main body preferably has a tubular shape (e.g., hollow-cylindrical and hollow-cuboid).

As to the structure, for example, the lamp main body has a structure having a single space or multiple-divided spaces, and may a single member or a combination of two or more members.

The material of the lamp main body may be appropriately selected depending on the purpose without particular limitation, and examples thereof include glass and resins.

The inner wall of the lamp main body is preferably a concave mirror surface or similar light reflection surfaces so that light emitted from the light source is converged thereon.

The light-emitted surface of the lamp main body is generally provided with a transparent lamp cover.

The lamp cover is not particularly limited, so long as it has a suitable shape/size for at least covering the light-emitted surface, and may be appropriately selected depending on the purpose. As to the shape, for example, the lamp cover has a rectangular, square or circular shape.

The lamp cover is colored in red when it is applied to a tail lamp which is required to develop red color. Alternatively, a lamp colored in red may be used together with a colorless cover instead of a colored cover.

< Light source >

The light source is not particularly limited and may be appropriately selected depending on the purpose. Examples thereof include light bulbs and LEDs. The light source is not limited in number, and one or more light sources may be employed.

Examples of the other members include a lamp box covering the lamp main body.

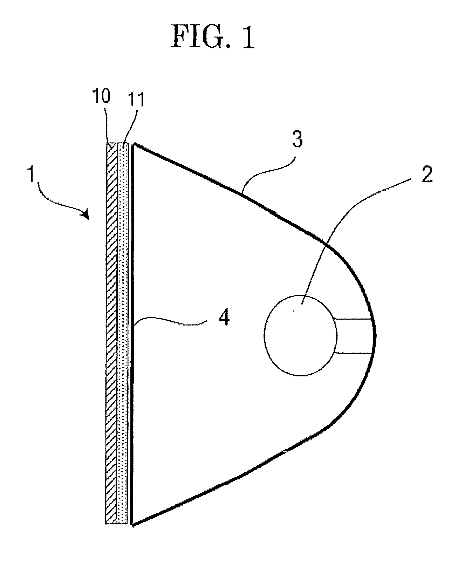

FIG. 1 is a schematic view of one exemplary lighting tool of the present invention. This lighting tool has a lamp main body 3, a light source 2 disposed in the lamp main body, and a circularly polarizing plate 1 which is disposed on a light-emitted surface (lamp cover) 4 so that light emitted from the light source passes therethrough.

The circularly polarizing plate 1 has a linearly polarizing plate 10 and a quarter-wave plate 11. This circularly polarizing plate is disposed over a light-emitted surface (lamp cover) of the lamp main body so that the quarter-wave plate thereof faces the light source.

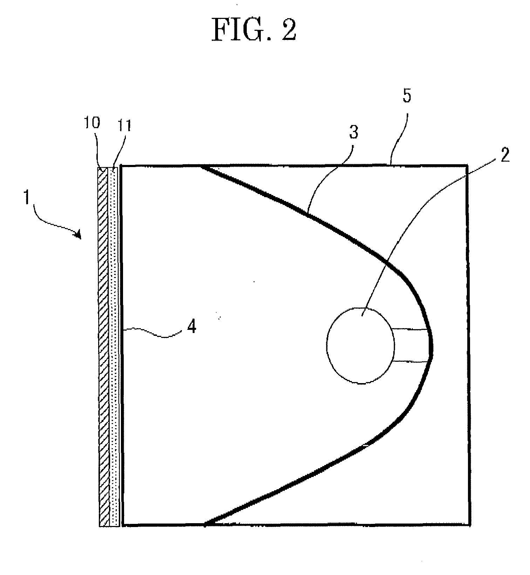

FIG. 2 is a schematic view of another exemplary lighting tool of the present invention. This lighting tool is the same as that shown in FIG. 1, except that the lamp main body 3 is covered with a lamp box 5. In this case, the circularly polarizing plate is disposed over a light-emitted surface of the lamp box.

The application of the lighting tool of the present invention is not particularly limited, so long as the lighting tool invites someone's attention through lighting, and may be appropriately selected depending on the purpose. For example, the lighting tool is used as a lighting tool which receives light, and preferably used as a vehicular taillight (tail lamp).

Examples of vehicles to which the lighting tool is applied as the vehicular taillight include automobiles (including recreation vehicles (RVs)), buses, autotrucks, railroad vehicles, motorcycles and bicycles.

< Outdoor display device >

An outdoor display device of the present invention includes a circularly polarizing plate on an image-displaying surface and, if necessary, further includes other members.

The circularly polarizing plate of the display device may be the same as that of the lighting tool.

The outdoor display device contains the circularly polarizing plate disposed on the image-displaying surface and thus, an external light which has entered the display device is mostly prevented from being emitted again as a reflected light, on the basis of the mechanism described above in relation to the lighting tool, As a result, image display with high contrast can be achieved even in daylight.

Also, an antireflection film is preferably provided on the linearly polarizing plate of the circularly polarizing plate. With this configuration, even when the display device receives a strong external light, a reflected light can be prevented from being emitted from the surface thereof.

The antireflection film is not particularly limited, so long as it has sufficient durability and heat resistance for practical use, and may be appropriately selected depending on the purpose. Examples thereof include (1) films each having fine convex/concave portions thereon, (2) two-layered films being composed of a high-refractive-index film and a low-refractive-index film, and (3) three-layered films being composed of a medium-refractive-index film, a high-refractive-index film and a low-refractivc-index film, with (2) two-layered films and (3) three-layered films being particularly preferred.

The antireflection film may be directly formed on a base surface through, for example, sol-gel processing, sputtering, vapor deposition and CVD. Alternatively, the antireflection film may be formed on a transparent support through coating such as dip coating, air-knife coating, curtain coating, roller coating, wire-bar coating, gravure coating, microgravure coating and extrusion coating, and then, be made to adhere to a base surface.

The display device can be applied to, for example, a variety of "digital signage" displays such as outdoor advertising displays, advertising displays in large stores, displays in railroad stations, and flight boards in airports.

Examples

The present invention will next be described by way of examples, which should not be construed as limiting the present invention thereto.

(Production Example 1)

- Synthesis step of gold nanoparticles (seed crystals)'

A 10 mM aqueous chloroauric acid solution (product of KANTO KAGAKU K.K.) (5 mL) was added to a 100 mM aqueous CTAB (cetyltrimethylammonium bromide, product of Wako Pure Chemical Industries, Ltd.) solution (100 mL). Subsequently, a 10 mM aqueous sodium borohydride solution (10 mL) was prepared and immediately added to the above-prepared chloroauric acid-CTAB mixture. The resultant mixture was vigorously stirred to form gold nanoparticles (seed crystals).

- Gold nanorods (core nanorods) synthesizing step -

A 10 mM aqueous silver nitrate solution (100 mL), a 10 mM aqueous chloroauric acid solution (200 mL) and a 100 mM aqueous ascorbic acid solution (50 mL) were added to a 100 mM aqueous CTAB solution (1,000 mL), followed by stirring, to thereby prepare a colorless, transparent liquid. Thereafter, the above-prepared aqueous gold nanoparticles (seed crystals) solution (100 mL) was added to the resultant liquid, followed by stirring for 2 hours, to thereby prepare an aqueous gold nanorod solution.

< Evaluation >

The thus-obtained gold nanorods were measured for absorption spectrum using a UV-Vis infrared spectrometer (V-670, product of JASCO Corporation). From the obtained spectral chart, the gold nanorods were found to show absorption at 510 nm attributed to their minor axes and that at 800 nm attributed to their major axes.

The gold nanorods were observed with a transmission electron microscope (TEM) for short and long diameters, aspect ratios and equivalent-volume-sphere radii, and were found to be rod-like particles having a short diameter of 6 nm, a long diameter of 21 nm, an aspect ratio of 3.5, and an equivalent-volume-sphere radius of 5.7 nm.

Removal of CTAB -

The thus-prepared aqueous gold nanorod solution was left to stand at 5°C for 12 hours. The precipitated CTAB crystals were separated through filtration with a filter fabric (#200), to thereby prepare a gold nanorod dispersion from which CRAB had been roughly removed. In this treatment, the recovery rate of CTAB was found to be about 75%.

Silver shell forming step .

The above-prepared gold nanorod dispersion (2 kg), a 10 mM aqueous silver nitrate solution (100 mL) and a 100 mM aqueous ascorbic acid solution (100 mL) were added to a 1% by mass aqueous PVP (polyvinylpyrrolidone K30, product of Wako Pure Chemical Industries, Ltd.) solution (8 kg), followed by stirring. Subsequently, a 0.1N aqueous sodium hydroxide solution (280 mL) was added to the resultant mixture over 5 min so that the pH thereof was adjusted to 7 to 8. In this manner, silver was precipitated on the surfaces of the gold nanorods to synthesize gold core-silver shell nanorods.

The thus-obtained gold core-silver shell nanorod dispersion was 10-fold concentrated through ultrafiltration with an ultrafiltration membrane (ACP0013, product of Asahi Kasei Chemicals Corporation). Then, the thus-concentrated dispersion was purified until the electric conductivity reached 70 mS/m or lower, to thereby prepare a gold core-silver shell nanorod dispersion.

Next, the thus-obtained gold core-silver shell nanorod dispersion was measured, as follows, for optical characteristics, particle size, and shell/core nanorod volume ratio.

< Optical characteristics >

The obtained gold core-silver shell nanorods were measured for absorption spectrum using a UV-Vis infrared spectrometer (V-670, product of JASCO Corporation). The gold core-silver shell nanorods were found to show absorption at 410 nm attributed to their minor axes and that at 650 nm attributed to their major axes.

< Particle size, equivalent-volume-sphere radius, shell/core nanorod volume ratio and end portion shape >

Through observation under a transmission electron microscope (TEM), the obtained gold core-silver shell nanorods were measured for short and long diameters, aspect ratios and equivalent-volume-sphere radii, and were found to be rod-like particles having a short diameter of 12 nm, a long diameter of 24 nm, an aspect ratio of 2,0, and an equivalent-volume-sphere radius of 9.4 nm.

Also, the shell/core nanorod volume ratio was calculated through TEM observation and was found to be 3.6.

- Formation of gold core-silver shell nanorod-containing PVA film -

Subsequently, the thus-obtained gold core-silver shell nanorod dispersion (2.0 g) was mixed with a 10% by mass aqueous PVA124 solution (product of KURARAY CO., LTD.) (10.0 g) and pure water (10.0 g). Separately, an applicator having a thickness of 1 mm was placed on a clean PET base (thickness 200 $\mu$m, product of TOYOBO, CO., LTD.). The resultant mixture was applied thereon through bar coating with a coating bar (#0), followed by drying at room temperature for 12 hours. The dried PVA film was peeled off from the PET base, to thereby form a gold core-silver shell nanorod-containing PVA film having a thickness of 40 $\mu$m.

< Measurement of spectrum >

The obtained PVA film was measured for absorption spectrum using a UV-Vis infrared spectrometer (V-670, product of JASCO Corporation), and was found to exhibit absorption by gold-silver composite nanorods.

- Production of polarizing plate .

The obtained PVA film (thickness: 40 $\mu$m) was 4-fold uniaxially stretched using an automatic biaxially stretching apparatus while being heated at 90°C, to thereby produce a polarizing film (polarizing plate).

< Orientation degree >

The obtained polarizing plate was evaluated for polarizing property. Specifically, one polarizer was placed at an optical light path for a sample in a UV-Vis infrared spectrometer (V-670, product of JASCO Corporation), and the polarizing spectrum of the polarizing plate (sample) was measured at an angle of 0° or 90° formed between the polarizer and the stretching axis of the polarizing plate. Based on spectra obtained at angles of 0° and 90°, there was calculated orientation degree S; i.e., the ratio of absorbance at a maximum absorption wavelength by major axes of gold-silver composite nanorods at 0° to that at 90°. The orientation degree S is calculated by Formula 1 given below. The polarizing plate of Production Example 1 was found to have an orientation degree of 0.94. Also, through measurement for a transmission spetrum in a state where an angle formed between the polarizer and the stretching axis of the polarizing plate was adjusted to 45°, the polarizing plate was found to exhibit a transmittance of 50.2%.

Formula 1

$$S = (A_{0\ deg.} - A_{90\ deg.}) / (A_{0\ deg.} + 2A_{90\ deg.})$$

(Production Example 2)

- Production of circularly polarizing plate -

A quarter-wave plate PURE ACE WR (product of TEIJIN LIMITED.) was attached via an adhesive sheet (PD-SI, product of PANAC Corporation) to the polarizing plate of Production Example 1 so that the angle formed between a quarter-wave plate's optic axis and a polarizing plate's polarized light absorption axis was 45°, to thereby produce a circularly polarizing plate of Production Example 2.

(Production Example 3)

- Production of circularly polarizing plate -

The procedure of Production Example 2 was repeated, the polarizing plate was changed to an iodine/PVA polarizing plate (product of SANRITZ Co.), to thereby produce a circularly polarizing plate of Production Example 3.

(Examples 1 and 2 and Comparative Example 1)

The circularly polarizing plates of Production Example 2 (Example 1) and Production Example 3 (Example 2) were evaluated for lighting-related visibility and light resistance using the following optical model. Separately, the case where no circularly polarizing plate was used was similarly evaluated (Comparative Example 1).

< Evaluation of lighting-related visibility >

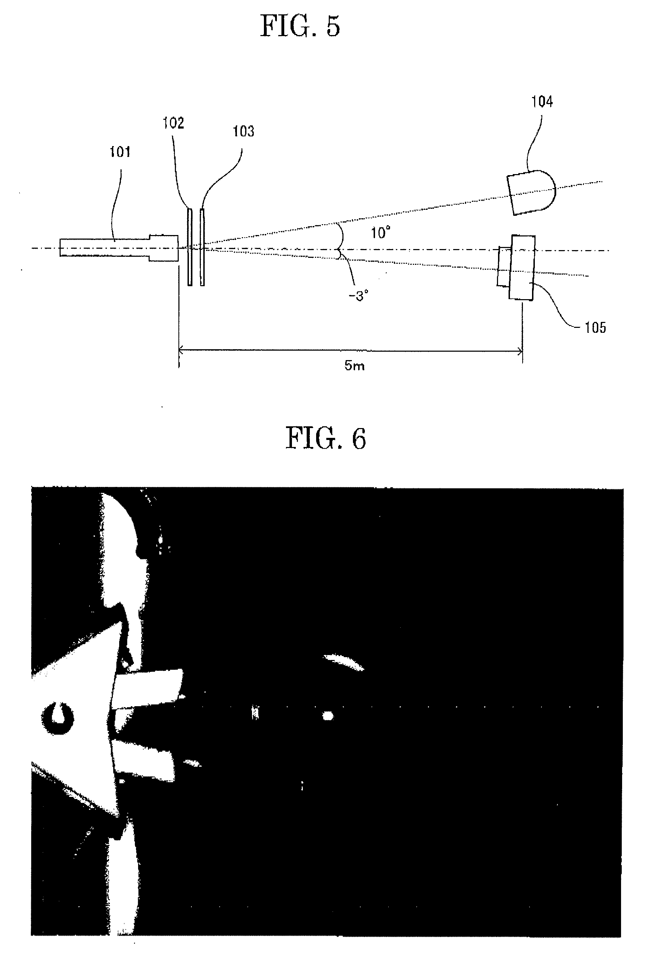

Each plate was evaluated for lighting-related visibility using an optical model assembled as shown in FIG. 5. Specifically, each of the circularly polarizing plates 102 of Production Examples 2 and 3 was disposed over a light-emitted surface of a cone-shape reflection mirror-containing penlight 101 (MINI MAGLITE AA, product of MAG INSTRUMENT) so that the quarter-wave plate faces the penlight. A red filter 103 (red-colored filter for LCD, product of Koshin Kogaku Co., Ltd.) was disposed on the side opposite to that where the penlight was disposed.
An artificial solar light 104 (SOLAX500-1AF, SERIC Ltd.) serving as an external light-emitting lamp was disposed at a distance of 5 m from the penlight tip and at an angle of +10° with respect to the frontal axis of the penlight (indicated by a dot-dash line). In this state, the penlight was irradiated with light from the artificial solar light.
A digital camera 105 was disposed at a distance of 5 m from the penlight tip and at an angle of -3° with respect to the frontal axis of the penlight (indicated by a dot-dash line). And, the state of the penlight was photographed with the digital camera,
[0088]    Using this optical model, the penlight was evaluated for lighting-related visibility in the presence or absence of the circularly polarizing plate. The results are shown in FIGs. 6 to 9.

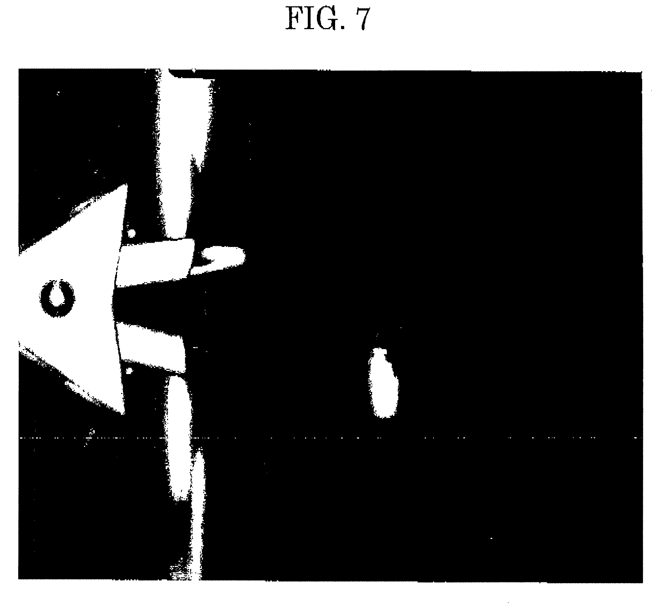

FIG. 6 is a photograph of Comparative Example 1 which was taken when the penlight was turned on in a state where no circularly polarizing plate was provided. FIG. 7 is a photograph of Comparative Example 1 which was taken when the penlight was turned off in a state where no circularly polarizing plate was provided. As is clear from these photographs, when the penlight is irradiated with an intense external light in a state where no circularly polarizing plate is provided, it is difficult due to the reflected light to visually determine whether or not the penlight itself is turned on, which indicates that lighting-related false recognition is highly likely to occur.

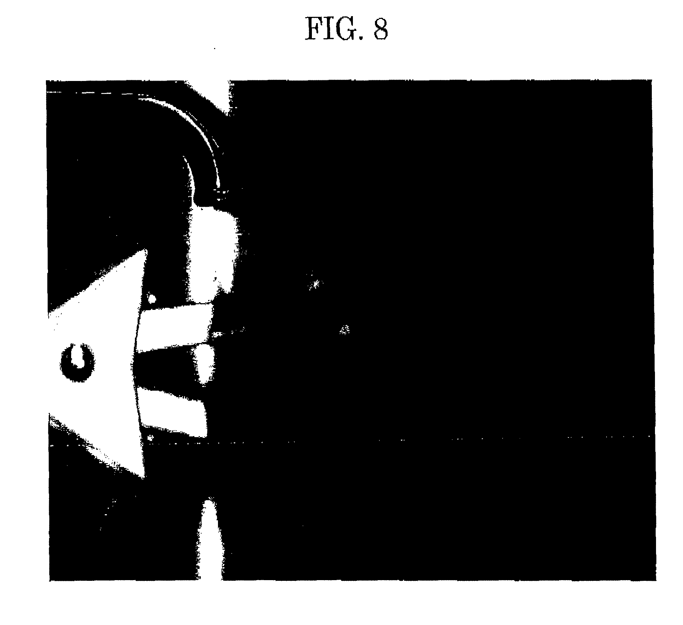

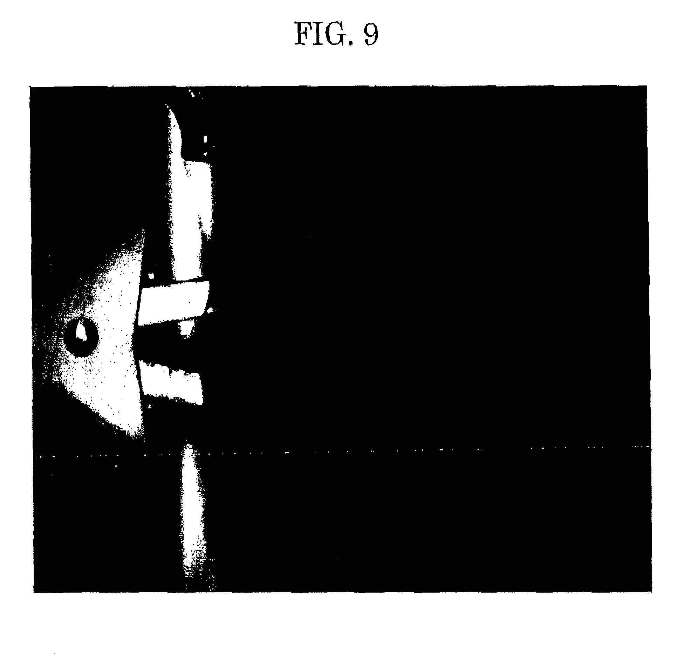

FIG. 8 is a photograph of each of Examples 1 and 2 which was taken when the penlight was turned on in a state where each of the circularly polarizing plates of Production Examples 2 and 3 was provided, FIG. 9 is a photograph of each of Examples 1 and 2 which was taken when the penlight was turned off in a state where each of the circularly polarizing plates of Production Examples 2 and 3 was provided. As is clear from these photographs, when the circularly polarizing plate is provided over a light-emitted surface, emission of a reflected light of the external light is suppressed, and it is easy to determine whether the penlight itself is turned on or off.

< Light resistance >

Each of the circularly polarizing plates of Production Examples 2 and 3 was subjected to a 1,000-hour light exposure test using an ultra-high pressure mercury lamp and then, was evaluated for lighting-related visibility similar to the above.

In Example 1 in which the circularly polarizing plate of Production Example 2 was used, similar photographs to FIGs. 8 and 9 were taken. By contrast, in Example 2 in which the circularly polarizing plate of Production Example 3 was used, similar photographs to FIGs. 6 and 7 were taken. Thus, the circularly polarizing plate of Production Example 2 (Example 1) was found to be superior in light resistance to that of Production Example 3 (Example 2).

The lighting tool of the present invention can prevent lighting- related false recognition even when being irradiated with a high-intensity external light, and is excellent in durability. Thus, it is preferably used as a tail lamp of various vehicles such as automobiles (including recreation vehicles (RVs)), buses, autotrucks, motorcycles, bicycles and railroad vehicles.

The mechanism in which the lighting tool of the present invention prevents lighting-related false recognition when being irradiated with a high-intensity external light can be applied to outdoor display devices (e.g., LED displays) which capable of exhibiting remarkably enhanced contrast even when being irradiated with a high-intensity external light.

**Claims**

1. A lighting tool, comprising

   a circularly polarizing plate disposed over a light-emitted surface of the lighting tool.

2. The lighting tool according to claim 1, further comprising a lamp main body and a light source disposed in the lamp main body, wherein the circularly polarizing plate is disposed over the light-emitted surface so that light emitted from the light source passes therethrough.

3. The lighting tool according to any one of claims 1 and 2, wherein the circularly polarizing plate comprises a linearly polarizing plate and a quarter-wave plate, and wherein the linearly polarizing plate and the quarter-wave plate are attached to each other so that an angle formed between a polarized light absorption axis of the linearly polarizing plate and an optic axis of the quarter-wave plate is 45°.

4. The lighting tool according to claim 3, wherein the circularly polarizing plate is disposed over the light-emitted surface so that the quarter-wave plate faces the light source.

5. The lighting tool according to any one of claims 3 and 4, wherein the linearly polarizing plate comprises a rod-like metal microparticle as a polarizer.

6. The lighting tool according to claim 6, wherein the rod-like metal microparticle has a core-shell structure in which a core nanorod is covered with a shell.

7. The lighting tool according to any one of claims 5 and 6, wherein the rod-like metal microparticle is at least one selected from gold, silver, copper and aluminum.

8. The lighting tool according to any one of claims 1 to 7, wherein the lighting tool serves as a vehicular taillight.

9. An outdoor display device comprising

   a circularly polarizing plate disposed over an image-displaying surface of the outdoor display device,
   wherein the circularly polarizing plate includes a quarter-wave plate and a linearly polarizing plate containing a polarizer, and
   wherein the polarizer is a rod-like metal microparticle.

   10. The outdoor display device according to claim 9, further comprising an antireflection film over the linearly polarizing plate of the circularly polarizing plate.

FIG. 1

EP 2 172 701 A2

FIG. 2

12

# FIG. 3

External light

1

10

11

12

FIG. 4

# FIG. 5

# FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003141907 A
- JP 5027118 A
- JP 5027119 A
- JP 10068816 A
- JP 10090521 A
- WO 0026705 A
- WO 0065384 A

### Non-patent literature cited in the description

- *NIKKEI MICRODEVICES,* August 2008, 53-61